# EUROPEAN PATENT SPECIFICATION

(11) **EP 2 403 789 B1**
(45) Date of publication and mention of the grant of the patent: **11.11.2015**
(21) Application number: 10711757.4
(22) Date of filing: 24.02.2010
(51) Int. Cl.: B65H 19/29, B65G 15/30

(54) **GLUING DEVICE FOR LOGS OF WOUND WEB-LIKE MATERIAL**
LEIMUNGSVORRICHTUNG FÜR ROLLEN AUS GEWICKELTEM BAHNMATERIAL
DISPOSITIF DE COLLAGE POUR ROULEAUX DE MATÉRIAU DE TYPE BANDE ENROULÉ

(30) Priority: 04.03.2009 IT FI20090038
(43) Date of publication of application: 11.01.2012
(73) Proprietor: Fabio Perini S.p.A., 55100 Lucca (IT)
(72) Inventor: GELLI, Mauro, I-55066 Capannori (LU) (IT); RICCI, Mauro, I-55017 S.Pietro a Vico (LU) (IT)
(74) Representative: Mannucci, Michele
(86) International application number: PCT/IT2010/000078
(87) International publication number: WO 2010/100666

(56) References cited:
- EP-A- 0 541 496
- WO-A-2008/126122
- US-A- 5 681 421
- US-A1- 2002 170 649
- US-A1- 2006 086 860

## Description

### Technical field

The present invention relates to a gluing device for logs of web-like material, for example and in particular (but not exclusively) a gluing device for logs of tissue paper, the function of which is to seal the free final edge of logs fed from a machine upstream in a converting line, such as a rewinding machine.

### State of the art

In the production of logs of tissue paper, such as toilet paper, household towels or other tissue paper products, machines are used to produce logs or rolls of diameter equal to the final diameter of the product destined for sale and length equal to a multiple of the axial length of the finished products. These logs or reels must be subsequently cut orthogonally to their axis to obtain the finished product to be packaged. Before cutting the logs, the final free end of the web material of each log must be glued or sealed to the outer surface of the log to prevent it from unwinding during the subsequent cutting and packaging operations.

For this purpose, devices to glue the final edge of the logs have been manufactured, which typically comprise means for opening and positioning the free edge of each log and a glue applicator that applies glue to the free edge or to the surface of the log. After application of the glue the free edge is subsequently rewound and fastened to the surface of the log.

Examples of latest generation gluing devices are described in US-A-5,242,525 and in US-A-5,681,421 or in WO 2008/126122 A. These gluing devices typically have a log feeding path with a rotating distributor that introduces one log at a time from an input position towards a feeding path. Along said path the following operations are performed: opening and positioning of the free edge, applying glue and closing of the free edge.

In some known embodiments, the log or reel feeding path is formed between a lower feeding surface and an upper surface formed by a flexible conveying member, typically consisting of or comprising a series of parallel belts entrained around guide rollers and each having a lower branch defining an element for controlled feeding of the logs along the feeding path. Members are arranged along said path to open the free edge of each log and position it so as to allow, downstream of said members, application of the glue to the free edge or to the outer surface of the log. Opening of the free edge usually takes place by rotating the log and directing jets of air against the log to detach the free edge from the surface of the log and position it on a plane or on the feeding surface. A subsequent rotational or roto-translational movement of the log is used to position the free edge adjusting the length thereof, so that the log can then be taken over a glue dispenser that applies the glue to the outer surface of the log uncovered by the unwound free edge, or to the inner surface of the free edge. In the most modem gluing devices, the glue is applied making the log rolling either continuously or discontinuously over a glue dispenser, from which glue is dispensed by overflow, or by a collection system for collecting the gluefrom a reservoir below, including an element that takes the glue to the point of passage of the log.

These recently developed gluing devices have been improved to reach extremely high production speeds, in the order of 50-65 logs or reels per minute. The gluing speed of these machines is particularly important, as it must be compatible with the production rate of the machines upstream and in particular of the rewinding machine which, in more recent machines, reaches and exceeds paper winding speeds of 1000 m/min. At these feeding speeds of the material to be wound in the rewinding machine, as a function of the length of material wound in each log, it is possible to reach and exceed even 70 logs per minute delivered from the rewinding machine.

### Summary of the invention

According to one aspect, the object of the invention is to further improve gluing devices of the aforesaid type. The object of an embodiment of the invention is to further increase the production rate of the gluing device.

According to one aspect, the gluing device comprises: a log feeding path that extends at least partially between a flexible conveying member and a feeding surface; and a log inserter that sequentially introduces logs between the flexible conveying member and the feeding surface; and wherein the inserter comprises a flexible input member, provided with pushing elements for pushing single logs between the flexible conveying member and the feeding surface.

The inserter formed by the flexible input member in practice replaces the rotating inserters of prior art machines. These prior art inserters have the drawback of imparting to the logs a trajectory with a component orthogonal to the flexible conveying member towards which the logs must be inserted. Moreover, due to their structure, rotating inserters tend to push the logs, after insertion thereof, against the feeding surface below. The log insertion times is long and, moreover, due to the structure of the rotating inserter, it is difficult to control the movements of each single log in the insertion step into the space or channel between the feeding surface and the flexible conveying member. This difficulty involves a certain degree of uncertainty regarding the position effectively reached at all times by the log being feed through the machine. In other terms, in the insertion step into the path that extends between the lower feeding surface and the upper flexible conveying member, the movement of the log is not exactly and perfectly reproducible in conventional machines. This makes it necessary to provide a relatively slow log insertion rate, so that there is sufficient distance between one log and the next to avoid collision between successive logs also in the case of incorrect control of their movements.

It has instead been found that by using a flexible input member in place of the rotating member, much more accurate control of log movement is achieved during insertion between the flexible conveying member and the feeding surface. This, together with the more favorable shape of the introduction trajectory, allows a reduction of the time required for insertion and above all a reduction in the mutual distance between one log and the next inside the machine, so as to obtain a higher gluing frequency and ultimately a higher production rate.

In some embodiments a gluing device designed in this manner can reach and exceed the speed of 80 logs per minute, even reaching 85 logs per minute.

Further advantageous features and embodiments of the gluing device according to the invention are set forth in the dependent claims, which form an integral part of the present description.

In some embodiments, the flexible insertion member is entrained around at least a first guide roller and a second guide roller, thus forming a feeding branch and a return branch. Preferably, the feeding branch is substantially rectilinear, inclined and converging towards the flexible conveying member. In some embodiments, the trajectory defined by the feeding branch of the flexible input member is substantially tangent to the feeding surface in the portion in which the flexible input member is entrained around one of said first and second guide roller.

In some embodiments, the feeding branch of the flexible input member forms, with the feeding surface, a substantially continuous trajectory, a portion of which is formed of the feeding branch of said flexible input member that gradually approaches the flexible conveying member. The feeding surface can form a further portion of the substantially continuous trajectory, extending about parallel to said flexible conveying member.

In some embodiments the feeding branch of the flexible input member cooperates with a log input cradle for individually picking the logs from said cradle and feeding them along a substantially rectilinear trajectory up to making them contact an active branch of said flexible conveying member.

The feeding surface can be formed by fixed elements. Preferably, in some embodiments said surface is at least partially formed by a fixed wall adjacent the flexible input member and advantageously can partially be formed by a belt or other flexible feeding member.

### Brief description of the drawings

The invention will be better understood by following the description and accompanying drawing, which shows a non-limiting practical embodiment of the invention. More in particular, in the drawing:
Fig.1 shows a schematic section on a vertical plane of a gluing device according to the invention; and
Figs.2A-2F show a schematic operating sequence of the gluing device.

### Detailed description of an embodiment of the invention

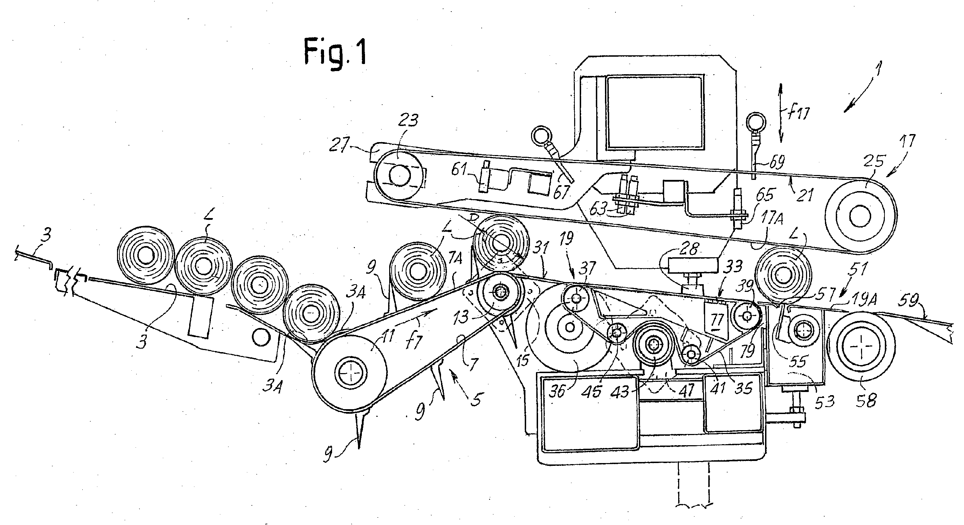

With reference to Fig.1, the gluing device, indicated as a whole with 1, comprises an input chute 3 along which the reels or logs L are fed from a rewinding machine, from a magazine or from another unit or machine upstream of the gluing device and not shown. The chute 3 terminates with a portion 3A having approximately a saddle-shaped or V-shaped structure. This end portion 3A can, for example, consist of a series of mutually parallel shaped plates arranged side by side according to a direction transverse to the log feeding direction along the machine, i.e. side by side according to a direction orthogonal to the plane of Fig. 1. The saddle portion 3A of the input chute 3 is adjacent to an inserter indicated as a whole with reference number 5 and comprising a flexible input member 7, for example consisting of a plurality of mutually parallel belts, bearing a plurality of pushers 9. The belts forming the flexible input member are preferably toothed belts.

The flexible input member 7 is entrained around a first guide member, for example a first toothed wheel 11 and around a second guide member, for example a second toothed wheel 13. When the flexible input member 7 is formed of a plurality of parallel belts, each roller 11, 13 can advantageously consist of a corresponding plurality of preferably toothed pulleys, each of which acts as an entraining member for one of the belts forming as a whole the flexible input member 7. Advantageously, one of the guide rollers 11, 13 is motor-driven. In the example shown, a motor 15 is provided to drive the guide roller 13, but it must be understood that the motor could be provided on the other roller or on both. In some embodiments, an encoder or other position detecting system can be associated with the motor 15 or with another member, whose movement is controlled by the motor 15, to detect the position of the logs inserted into the machine. In a practical embodiment, the encoder is of the multi-turn type fitted to the brushless motor. The use of toothed belts and pulleys allows more accurate control of the position, due to the absence of mutual slipping between guide belts and pulleys.

The flexible input member 7 forms and defines a first section of a trajectory for log input and feed towards a space formed downstream of the guide roller 13, between a flexible conveying member 17 and a lower feeding surface indicated as a whole with 19, described in greater detail below.

More in particular, the flexible conveying member 17 comprises or consists of a series of flat belts 21 mutually parallel and entrained around a first roller 23 and a second roller 25. The belts 21 can also be toothed. The guide rollers 23 and 25 are supported by a unit 27 adjustable in height in a known manner, for example using an actuator 28. By adjusting the position of the unit 27, it is possible to modify the distance between the lower branch 17A of the flexible conveying member 17 and the feeding surface 19 below. This distance is about the same as or slightly less than the diameter D of the logs L to be glued by the machine. The possibility of adjusting the position of the flexible conveying member 17 according to the double arrow f17 allows the machine to be adapted for logs or reels L of variable diameter.

In some embodiments, the lower feeding surface 19 can comprise a first fixed surface portion 31, formed by fixed elements, for example consisting of parallel plates arranged side by side in the direction orthogonal to the plane of the figure, i.e. transverse with respect to the feeding direction of the logs L and preferably alternated with the belts forming the flexible input member 7. In some embodiments the plates forming the fixed portion 31 of the feeding surface 19 are substantially tangent to the final portion of the upper branch of the flexible input member 7 in the point in which the latter is entrained around the roller 13, so as to define a continuous log feeding path.

The fixed portion 31 of the feeding surface 19 is preferably about parallel to the lower branch 17A of the flexible conveying member 17, while the upper branch 7A of the flexible input member 7 is converging towards the lower branch 17A of the flexible conveying member 17. This means that viewed in the direction of feed f7 the upper branch 7A in its movement gradually approaches the lower branch 17A of the flexible conveying member 17. This allows each reel or log L to gradually approach the lower branch 17A of the flexible conveying member 17 obtaining the advantages to be described later on.

In addition to the fixed part 31 the feeding surface 19 comprises a subsequent part 33 formed by the upper branches of a plurality of belts 35 entrained around rollers or pulleys 37, 39, 41, 43 and 45. At least one of these rollers or pulleys is motor-driven. In the example shown, a motor 47 is provided to operate the roller or the pulleys 43. The branch of the belts 35 defined between the roller 37 and the roller 39 or the group of pulleys 37 and the group of pulleys 39 is advantageously about parallel to the lower branch 17A of the flexible conveying member 17 and is placed at a distance therefrom about the same as or slightly less than the diameter D of the logs.

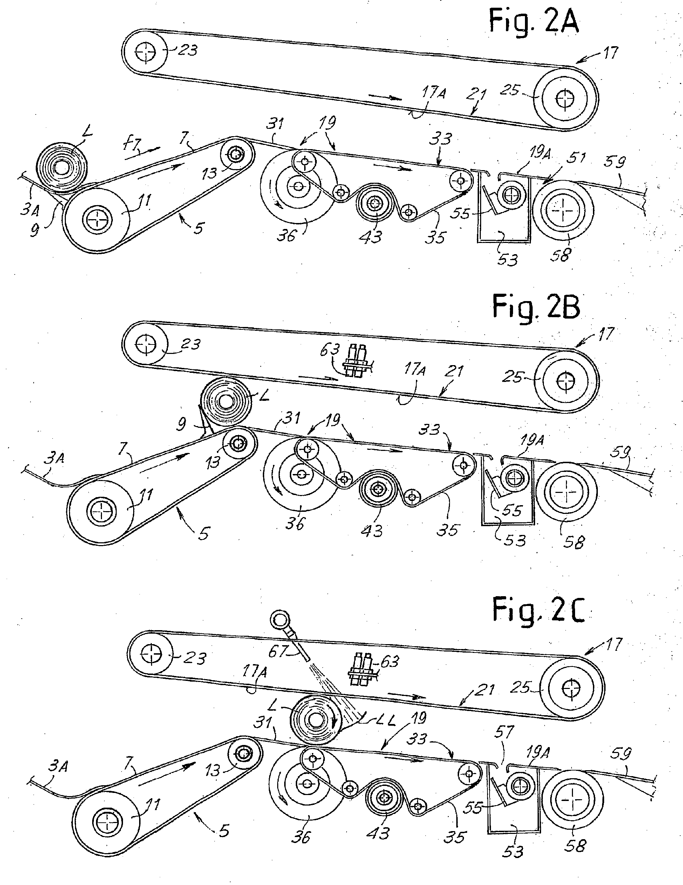

In some embodiments, the upper portion of a roller 36, with appropriate annular grooves, projects between the fixed portion 31 of the feeding surface 19 and the moving portion 33 of the feeding surface 19, formed by the upper branches of the belts 35. In other embodiments a plurality of rollers or positioning discs, driven in rotation by a common axis, can be provided. The plates forming the fixed portion 31 of the feeding surface and the belts forming the moving portion 33 of said feeding surface project in the annular grooves of the roller 36. The roller 36 is driven in rotation at a variable speed, in the manner and for the objects to be described later on with reference to the sequence shown in Figs. 2A-2F.

A glue dispensing unit 51, not described in detail and which can be designed as disclosed in the prior art patents cited in the introductory part of this description, is arranged downstream of the group of belts or other flexible members 35 defining the moving portion 33 of the lower feeding surface 19. In summary, the glue dispenser 51 comprises a glue reservoir 53, from which the glue is collected by a moving member 55, which can have an oscillating or rotating movement, or any other suitable movement, if necessary synchronized with the feeding movement of the logs L along the feeding path that extends between the flexible conveying member 17 and the feeding surface 19 below. The moving member 55 can, for example, consist of a taut wire or of a bar or a plate provided with a lifting and lowering movement to be immersed in the glue and positioned along the rolling path of the log L. In other embodiments, the moving member can be formed by a wire entrained around two pulleys. Alternatively, the glue can be fed by a dispensing system to overflow from a slot or elongated dispensing opening, or a series of openings, holes or windows aligned in an appropriate manner transverse to the log feeding direction.

The feeding surface 19 extends into a rolling surface 19A along which an opening or slot 57 is provided, on which each log L to be glued rolls in a continuous or discontinuous manner. The glue is brought approximately at this slot or opening for application to the log or log L. In the example shown, the moving member 55 is positioned cyclically at said slot or opening 57. Whatever the transfer mechanism of the glue to the area of the slot or opening 57, glue is available in this area for gluing of the logs L when they roll on the rolling surface 19A forming an extension of the feeding surface 19.

The rolling feeding movement can advantageously be controlled by the flexible conveying member 17 which, for this purpose, also extends beyond the series of belts 35, above the rolling surface 19A and up to a rewinding roller 58 which is located approximately below the guide roller or series of guide pulleys. A delivery chute 59, on which the logs or logs L are ejected one after the other once they have been glued, extends downstream of the roller 58.

The means for opening the free final edge of each log and positioning said edge with respect to the log and for feeding the log with the free edge open towards the glue dispensing unit 51 are arranged along the log feeding path in the space between the lower branch 17A, the flexible conveying member 17 and the feeding surface 19. These means comprise sensors or detectors and blower members and cooperate with the movement of the belts forming the flexible conveying member 17 and the belts 35 forming the moving portion 33 of the lower feeding surface 19.

In some embodiments a first photocell 61 is provided to detect the arrival of each log L in the point of insertion into the area or space between the lower branch 21A of the flexible conveying member 21 and the feeding surface 19.

Further photocells 63, 65 can be arranged along the lower branch 17A of the flexible member 17, downstream of the photocell 61. Besides the photocells or other sensors 61, 63 and 65, blower members are arranged along the feeding path of the logs L between the feeding surface 19 and the flexible conveying member 17. In some embodiments said blower members comprise a first series of nozzles 67 that generate air flows inclined in the feeding direction of the logs L and a second series of nozzles 69 downstream of the first series with respect to the log feeding direction, which generate approximately vertical air jets. The nozzles 67 are used to generate jets that favor or facilitate opening of the free edge, when the log L is positioned near said nozzles, so as to take the free edge above the belts 35 and, in the manner described below, perform positioning thereof. The nozzles 69 generate jets of air that facilitate tensioning of the free edge in the gluing step, as described in greater detail below.

The gluing cycle of a single log is shown in greater detail in the sequence of Figs. 2A to 2F. In this sequence a single log is represented to show the various operations performed in a time sequence thereon, but it must be understood that in general a plurality of logs introduced in rapid succession into the machine by the flexible input member 5 can be found simultaneously inside the machine, so as to obtain a very high gluing rate or frequency.

Fig. 2A shows a log to be glued that has been unloaded from the chute 3 into the cradle 3A. The log L is picked by the flexible input member 5 with its pushers and fed towards the flexible conveying member 17 according to a substantially rectilinear trajectory (arrow f7), until reaching the position shown in Fig.2B.

As can be seen in Figs.2A and 2B, the trajectory imparted by the flexible input member 5 is such that the log L contacts the lower branch 17A of the flexible conveying member 17 when (Fig. 2A) it is almost at the end of the path of the upper branch 7A of the flexible member 7 forming the inserter 5. As a result, the input trajectory is particularly favorable as the component of motion of the log L orthogonal to the lower branch 17A of the flexible conveying member 17 is very small or almost null and, contrary to the case of rotating inserters, the reel or log is not pushed upwards beyond the plane defined by the lower branch 17A of the flexible member 17. Therefore, the log continues to be fed under the control of the flexible conveying member 17 without being pressed or forced against the belts 21 defining the flexible conveying member 17. This allows the position of the reel or log to be precisely controlled by the movement of the flexible conveying member 17. Moreover, insertion of the reel or log is smoother and its surface is protected from rubbing that could cause tearing of the paper or other wound web material, or undesirable squeezing.

The log L continues its feed departing from the flexible input member 7 and starting to roll on the fixed portion 31 of the feeding surface 19 until coming into contact with the upper area of the lower roller 36 (Fig.2C). In this position log feed is temporarily halted, i.e. the axis of the log remains in this position for a certain time, while the log continues to rotate about its axis. This is achieved by controlling the rotation movement of the lower roller 36 and the movement of the upper flexible conveying member 17. By moving these two members at the same speed and in opposite directions the log remains in a specific position and rotates about its axis. The nozzles 67 generate jets of air that hit the log L and intercept the free edge LL thereof, causing it to unwind downwards against the surface 19 below.

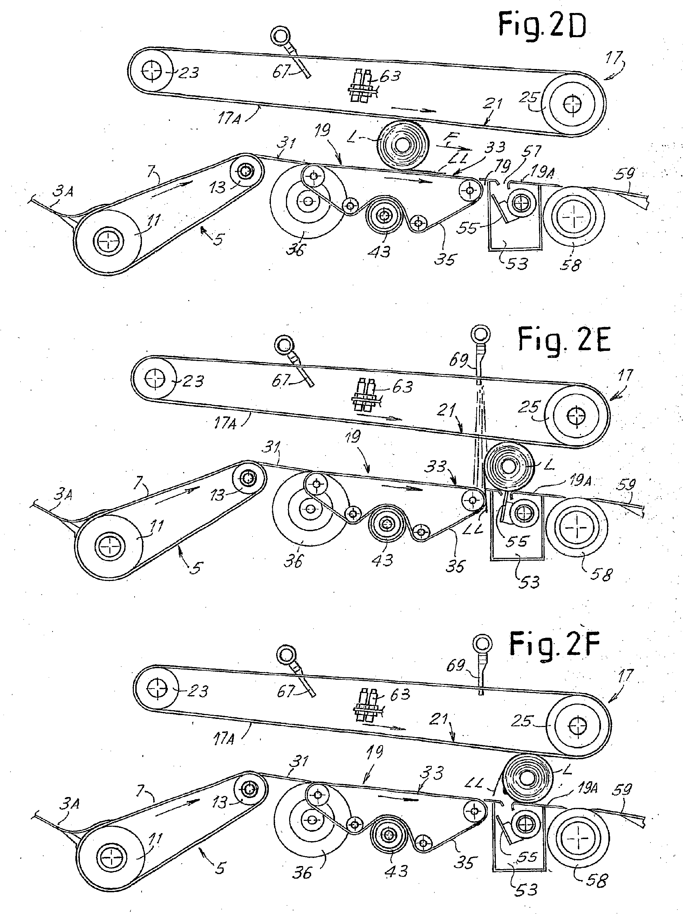

While the log continues to rotate about its axis, the edge unwound by the jets of air from the nozzles 67 is detected by the photocell or photocells 63, the position of which can be adjusted. In this manner, the length of the free edge LL unwound from the log can be controlled, in the sense that the log rotation movement is interrupted, stopping rewinding of the edge at the desired moment determined by the relative position between photocell 63 and machine structure. At this point log feed starts again along the feeding path due to stopping or slowing of the lower roller 36, so that the center of the log starts to move in the feeding direction F (Fig.2D) at a speed equal to half the difference between the speed of the lower branch 17A of the flexible conveying member 17 and the peripheral speed of the roller 36. During its feed the log contacts the belts 35 defining the moving portion 33 of the lower feeding surface 19. The upper branch of the belts 35 is moved at the same speed as the lower branch 17A of the flexible conveying member 17, or at a slightly different speed, depending on how the machine is adjusted. If the speed of the lower belts 35 and upper belts 21 is the same, the log is fed without rotating and the length of the unwound free edge LL remains the same as the length determined in the previous step. If the belts 35 and 21 are fed at different speeds, the log is subjected to a roto-translational movement with consequent lengthening or shortening of the unwound free edge LL, so as to be able to adjust (through the difference in speed between the belts 35 and 21) the length of the tail portion unwound from the log or log. The relative speed of the belts 21 and 35 and the position of the photocells 63 are selected so as to obtain, at the end of feeding towards the glue dispensing unit 51, a free edge LL of the desired length. Fig.2D shows an intermediate position of the log along the feeding path towards the glue dispensing unit 51.

The free edge LL is held flat on the belts 35 as a result of the suction generated by a suction box 77 with a perforated upper wall on which the belts 35 run, all according to a known arrangement.

When the log reaches the position corresponding to the final area of the belts 35 defining the moving part 33 of the lower feeding surface 19 (position that can be determined by the photocell 65), suction of the box 77 causes insertion of the free edge under the feeding surface 19 into a slot or space 79 below, in fluid communication with the inside of the box 77 (see Fig.2E). The controlled movement of the flexible conveying member 17 then causes continuation of the movement of the log L on the extension 19A of the lower feeding surface. This movement is advantageously a rolling movement, i.e. a movement in which the log rotates about an instantaneous rotation axis formed by the line of contact between the log L and the surface 19A so that passing over the opening or slot 57 a glue is applied to the outer surface of the log L without sliding movement between the moving glue applicator element 55 and the log L. The rolling movement can be continuous, by providing the flexible conveying member 17 with continuous motion at constant speed. Preferably, the lower belts 35 also have a constant speed, even if adjustable for the reasons indicated above.

Continuation of the rolling movement of the log L causes rewinding of the free edge and feeding of the log to the space between the roller 57 and the guide roller or pulley 25 of the flexible conveying member 17. The movement of these members is controlled so as to make the log or reel L perform one or more revolutions about itself maintaining the axis in a more or less fixed position between the rotation axes of the members 25 and 57, so as to exert a slight pressure that permanently closes the free edge glued on the outer surface of the log L. Stopping or slowing the rotation of the lower roller 57 then causes the log to be ejected onto the unloading delivery chute 59 (see Fig. 2F).

The flexible input member 7 with the pushers 9 of the inserter 5, appropriately oriented to converge towards the lower branch 17A of the flexible conveying member 17 and arranged so that its upper branch 7A is tangent to the fixed portion 31 of the feeding surface 19, allows very efficient control of the log in the step of insertion into the feeding space between the lower branch 17A of the upper flexible conveyor member 17 and the feeding surface 19 below. As observed previously, in the final part of the trajectory imparted to the log L by the inserter 5, the component of motion orthogonal to the lower branch 17A of the flexible conveying member 17 is very small or null and therefore the log is pushed only against the lower branch 17A of the flexible member 17 so that it can be engaged correctly thereby through friction and then fed in a controlled manner by the movement of the flexible conveying member 17, without excessive forcing of the log either against the lower branch 17A of the flexible conveying member 17 or against the fixed surface 31 below, as is instead the case in rotating insertion systems.

Insertion is very fast and smooth and control of the log L is much more efficient. Uncertainties regarding the position in which the log is located are prevented, due to the fact that control of its movement passes, in a smooth and reliable manner, from the pusher 9 to the lower branch 17A of the flexible conveying member 17. This latter can advance at a greater speed with respect to the feed speed of the flexible input member 7 or at the same speed as the latter, so that the log, also as a result of the trajectory converging towards the lower branch 17A of the flexible conveying member 17, is not subjected to sudden changes of path, sudden accelerations or compression or thrust effects. It is then possible, using an encoder associated with the drive motor or motors of the input member 5 and of the flexible conveying member 17, to control with sufficient precision and to know with sufficient certainty the position of each log inserted into the machine. This allows the log insertion and feed path in the machine to be made shorter, i.e. to have less distance between one log and the next and therefore, ultimately, to obtain a higher gluing rate.

It is understood that the drawing shows just one example, provided merely as a practical demonstration of the invention, which can vary in its forms and arrangements, without however departing from the scope of the concept underlying the invention. Any reference numbers in the appended claims are provided to facilitate reading of the claims with reference to the description and to the drawing, and do not limit the scope of protection represented by the claims.

## Claims

1. A gluing device 1 logs of web-like material comprising: a log feeding path that extends at least partially between a flexible conveying member 17 and a feeding surface 19; and a log inserter 5 that sequentially introduces logs L between the flexible conveying member 17 and the feeding surface 19; **characterized in that** the log inserter 5 includes a flexible input member 7, provided with pushing elements 9 for pushing single logs L between the flexible conveying member 17 and the feeding surface 19.

2. Gluing device according to claim 1, **characterized in that** said flexible input member 7 is entrained around at least a first guide roller 11 and a second guide roller 13 forming a feeding branch and a return branch, at least one of said first guide roller 11 and said second guide 13 roller being motor-driven.

3. Gluing device according to claim 2, **characterized in that** said feeding branch is substantially rectilinear, inclined and converging towards said flexible conveying member 17.

4. Gluing device according to claim 2 or 3, **characterized in that** the trajectory defined by the feeding branch of the flexible input member 7 is substantially tangent to the feeding surface 19 in the portion in which said flexible input member 7 is entrained around one of said first and second guide roller 11, 13

5. Gluing device according to claim 2, 3 or 4, **characterized in that** the feeding branch of the flexible input member 7 and the feeding surface 19 form a substantially continuous trajectory, a portion of which is formed of the feeding branch of said flexible input member 7 that gradually approaches the flexible conveying member 17.

6. Gluing device according to claim 5, **characterized in that** said feeding surface 19 defines a further portion of said substantially continuous trajectory, extending about parallel to said flexible conveying member 17.

7. Gluing device according to one or more of the previous claims, **characterized in that** said feeding branch of the flexible input member 7 cooperates with a log input cradle for individually picking the logs L from said cradle and feeding them along a substantially rectilinear trajectory, up to making them contact an active branch of said flexible conveying member 17.

8. Gluing device according to one or more of the previous claims, **characterized in that** said feeding surface 19 is defined at least partially by a fixed wall adjacent said flexible input member.

9. Gluing device according to one or more of the previous claims, **characterized in that** said feeding surface 19 defined by a fixed wall followed by a flexible feeding member, said flexible feeding member and said fixed wall defining a substantially flat surface extending about parallel to and below a lower branch of said flexible conveying member 17.

10. Gluing device according to claim 9, **characterized in that** a motor-driven member protrudes between said fixed wall and said flexible feeding member, said motor-driven member being controlled and arranged for cooperating with said flexi-ble conveying member for positioning the free edge of said logs L.

11. Gluing device according to one or more of the previous claims, **characterized in that** a glue applicator 55 is arranged downstream of said feeding surface 19, above which said flexible conveying member 17 extends, the log feeding path extending between said flexible conveying member 17 and said glue applicator 55.

12. Gluing device according to one or more of the previous claims, **characterized in that** members for opening and positioning the free final edge 22 of said logs L are arranged along said log-feeding path, between said feeding surface 19 and said flexible conveying member 17.

## Patentansprüche

1. Leimungsvorrichtung (1) für Rollen aus Bahnmaterial, umfassend: einen Rollenzuführweg, der sich zumindest teilweise zwischen einem flexiblen Förderelement (17) und einer Zuführfläche (19) erstreckt, und eine Rolleneinschubeinrichtung (5), die nacheinander Rollen (L) zwischen dem flexiblen Förderelement (17) und der Förderfläche (19) einführt, **dadurch gekennzeichnet, dass** die Rolleneinschubeinrichtung (5) ein flexibles Eingabeelement (7) umfasst, das mit Schubelementen (9) zum Einschieben einzelner Rollen (L) zwischen dem flexiblen Förderelement (17) und der Förderfläche (19) ausgestattet ist.

2. Leimungsvorrichtung nach Anspruch 1, **dadurch gekennzeichnet, dass** das flexible Eingabeelement (7) um mindestens eine erste Führungswalze (11) und eine zweite Führungswalze (13) herum mitgenommen wird, die einen Zuführbahnbereich und einen Rückführbahnbereich definieren, wobei mindestens eine der Walzen, die erste Führungswalze (11) oder die zweite Führungswalze (13), motorisch angetrieben ist.

3. Leimungsvorrichtung nach Anspruch 2, **dadurch gekennzeichnet, dass** der Zuführbahnbereich im Wesentlichen geradlinig, geneigt ist und in Richtung des flexiblen Förderelements (17) zusammenläuft.

4. Leimungsvorrichtung nach Anspruch 2 oder 3, **dadurch gekennzeichnet, dass** in dem Abschnitt, in dem das flexible Eingabeelement (7) um eine der Führungswalzen, die erste oder die zweite Führungswalze (11, 13), herum mitgenommen wird, die durch den Zuführbahnbereich des flexiblen Eingabeelements bestimmte Bahn (7) im Wesentlichen tangential zu der Förderfläche (19) verläuft.

5. Leimungsvorrichtung nach Anspruch 2, 3 oder 4, **dadurch gekennzeichnet, dass** der Zuführbahnbereich des flexiblen Eingabeelements (7) und die Zuführfläche (19) eine im Wesentlichen kontinuierliche Bahn bilden, wobei ein Abschnitt derselben durch den Zuführbahnbereich des flexiblen Eingabeelements (7) gebildet wird, der sich allmählich dem flexiblen Förderelement (17) nähert.

6. Leimungsvorrichtung nach Anspruch 5, **dadurch gekennzeichnet, dass** die Zuführfläche (19) einen weiteren Abschnitt der im Wesentlichen kontinuierlichen Bahn bildet, die sich ungefähr parallel zu dem flexiblen Förderelement (17) erstreckt.

7. Leimungsvorrichtung nach einem oder mehreren der vorhergehenden Ansprüche, **dadurch gekennzeichnet, dass** der Zuführbahnbereich des flexiblen Eingabeelements (7) mit einer Rolleneingabewiege zusammenwirkt, um die Rollen (L) einzeln aus der Wiege zu entnehmen und diese entlang einer im Wesentlichen geradlinigen Bahn zuzuführen, bis diese in Kontakt mit einem aktiven Bahnbereich des flexiblen Förderelements (17) kommen.

8. Leimungsvorrichtung nach einem oder mehreren der vorhergehenden Ansprüche, **dadurch gekennzeichnet, dass** die Zuführfläche (19) mindestens teilweise durch eine feste Wandung angrenzend an das flexible Eingabeelement bestimmt ist.

9. Leimungsvorrichtung nach einem oder mehreren der vorhergehenden Ansprüche, **dadurch gekennzeichnet, dass** die Zuführfläche (19) durch eine feste Wandung gefolgt von einem flexiblen Zuführelement bestimmt ist, wobei das flexible Zuführelement und die feste Wandung eine im Wesentlichen ebene Oberfläche bilden, die sich ungefähr parallel zu einem unteren Bahnbereich des flexiblen Förderelements (17) und unterhalb desselben erstreckt.

10. Leimungsvorrichtung nach Anspruch 9, **dadurch gekennzeichnet, dass** zwischen der festen Wandung und dem flexiblen Zuführelement ein motorisch angetriebenes Element vorsteht, wobei das motorisch angetriebene Element derart gesteuert wird und angeordnet ist, dass es mit dem flexiblen Förderelement zusammenwirkt, um die freie Kante der Rollen (L) zu positionieren.

11. Leimungsvorrichtung nach einem oder mehreren der vorhergehenden Ansprüche, **dadurch gekennzeichnet, dass** ein Leimapplikator (55) nachgeordnet der Zuführfläche (19) angeordnet ist, über dem sich das flexible Förderelement (17) erstreckt, wobei sich der Rollenzuführweg zwischen dem flexiblen Förderelement (17) und dem Leimapplikator (55) erstreckt.

12. Leimungsvorrichtung nach einem oder mehreren der vorhergehenden Ansprüche, **dadurch gekennzeichnet, dass** Elemente zum Öffnen und Positionieren der freien Endkante (LL) der Rollen (L) entlang des Rollenzuführweges zwischen der Zuführfläche (19) und dem flexiblen Förderelement (17) angeordnet sind.

## Revendications

1. Un dispositif de collage (1) pour des rouleaux de type matériau en bande comprenant : un chemin d'amenée de rouleaux qui s'étend au moins partiellement entre un organe de transport flexible (17) et une surface d'amenée (19) ; et un inséreur de rouleaux (5) qui introduit séquentiellement des rouleaux (L) entre l'organe de transport flexible (17) et la surface d'amenée (19) ; **caractérisé en ce que** l'inséreur de rouleaux (5) inclut un organe d'introduction flexible (7), pourvu d'élément de poussée (9) pour pousser des rouleaux individuels (2) entre l'organe de transport flexible (17) et la surface d'amenée (19).

2. Dispositif de collage selon la revendication 1, **caractérisé en ce que** ledit organe d'introduction flexible (7) est entraîné autour d'au moins un premier rouleau de guidage (11) et un second rouleau de guidage (13) formant une zone d'amenée et une zone de retour, au moins l'un dudit premier rouleau de guidage (11) et dudit second rouleau de guidage (13) étant entraîné par un moteur.

3. Dispositif de collage selon la revendication 2, **caractérisé en ce que** ladite zone d'amenée est sensiblement rectiligne, inclinée et convergente vers ledit organe de transport flexible (17).

4. Dispositif de collage selon la revendication 2 ou 3, **caractérisé en ce que** la trajectoire définie par la zone d'amenée de l'organe d'introduction flexible (7) est sensiblement tangente à la surface d'amenée (19) dans la partie dans laquelle ledit organe d'introduction flexible (7) est entraîné autour dudit premier ou dudit second rouleau de guidage (11, 13).

5. Dispositif de collage selon la revendication 2, 3 ou 4, **caractérisé en ce que** la zone d'amenée de l'organe d'introduction flexible (7) et la surface d'amenée (19) forment une trajectoire sensiblement continue, dont une partie est formée par la zone d'amenée dudit organe d'introduction flexible (7) qui s'approche graduellement de l'organe de transport flexible (17).

6. Dispositif de collage selon la revendication 5, **caractérisé en ce que** ladite surface d'amenée (19) forme une autre partie de ladite trajectoire sensiblement continue, s'étendant à peu près parallèlement audit organe de transport flexible (17).

7. Dispositif de collage selon une ou plusieurs des revendications précédentes, **caractérisé en ce que** ladite zone d'amenée de l'organe d'introduction flexible (7) coopère avec un berceau d'introduction de rouleaux pour saisir individuellement les rouleaux (L) depuis ledit berceau et les amener le long d'une trajectoire sensiblement rectiligne jusqu'à les faire entrer en contact avec une zone active dudit organe de transport flexible (17).

8. Dispositif de collage selon l'une ou l'autre des revendications précédentes, **caractérisé en ce que** ladite surface d'amenée (19) est formée au moins partiellement par une paroi fixe adjacente audit organe d'entrée flexible.

9. Dispositif de collage selon une ou plusieurs des revendications précédentes, **caractérisé en ce que** ladite surface d'amenée (19) est formée par une paroi fixe suivie d'un organe d'amenée flexible, ledit organe d'amenée flexible et ladite paroi fixe formant une surface sensiblement plane s'étendant à peu près parallèlement à et sous une zone inférieure dudit organe de transport flexible (17).

10. Dispositif de collage selon la revendication 9, **caractérisé en ce qu'**un organe entraîné par un moteur fait saillie entre ladite paroi fixe et ledit organe d'amenée flexible, ledit organe entraîné par un moteur étant commandé et agencé pour coopérer avec ledit organe de transport flexible afin de positionner le bord libre desdits rouleaux (L).

11. Dispositif de collage selon une ou plusieurs des revendications précédentes, **caractérisé en ce qu'**un applicateur de colle (55) est agencé en aval de ladite surface d'amenée (19), au-dessus de laquelle ledit organe de transport flexible (17) s'étend, le chemin d'amenée de rouleaux s'étendant entre ledit organe de transport flexible (17) et ledit applicateur de colle (55).

12. Dispositif de collage selon une ou plusieurs des revendications précédentes, **caractérisé en ce que** des organes pour ouvrir et positionner le bord final libre (22) desdits rouleaux (L) est agencé le long dudit chemin d'amenée de rouleaux, entre la surface d'amenée (19) et ledit organe de transport flexible (17).
